# EUROPEAN PATENT SPECIFICATION

(11) **EP 4 296 089 B1**
(45) Date of publication and mention of the grant of the patent: **11.06.2025**
(21) Application number: 22180161.6
(22) Date of filing: 21.06.2022
(51) Int. Cl.: B60C 11/24, G06V 10/82

(54) **TIRE TREAD WEAR DETERMINATION SYSTEM AND METHOD USING DEEP ARTIFICIAL NEURAL NETWORK**
REIFENLAUFFLÄCHENABNUTZUNGSBESTIMMUNGSSYSTEM UND -VERFAHREN UNTER VERWENDUNG EINES TIEFEN KÜNSTLICHEN NEURONALEN NETZWERKS
SYSTÈME ET PROCÉDÉ DE DÉTERMINATION D'USURE DE CHAPE DE PNEU UTILISANT UN RÉSEAU DE NEURONES ARTIFICIELS PROFOND

(43) Date of publication of application: 27.12.2023
(73) Proprietor: Autopedia Co., Ltd., Busan 46721 (KR)
(72) Inventor: JO, Jaeyoung, 04790 Seoul (KR); KIM, Bosung, 04790 Seoul (KR)
(74) Representative: advotec.

(56) References cited:
- WO-A1-2020/205640
- CN-A- 109 649 091
- JP-A- 2022 023 401
- KR-B1- 102 062 271
- US-A1- 2020 125 887
- US-A1- 2022 101 512
- SIVAMANI C. ET AL: "Tyre Inspection through Multi-State Convolutional Neural Networks", INTELLIGENT AUTOMATION AND SOFT COMPUTING, vol. 27, no. 1, 1 January 2021 (2021-01-01), US, pages 1 - 13, XP055942616, ISSN: 1079-8587, Retrieved from the Internet <URL:https://www.researchgate.net/profile/Seifedine-Kadry/publication/348330681_Tyre_Inspection_through_Multi-State_Convolutional_Neural_Networks/links/603631ba4585158939c60bac/Tyre-Inspection-through-Multi-State-Convolutional-Neural-Networks.pdf> DOI: 10.32604/iasc.2021.013705

## Description

### BACKGROUND OF THE INVENTION

### Field of the Invention

The present invention relates to a tire tread wear determination system and method and, more particularly, to a system and method for automatically determining the wear condition of a tire tread using a deep artificial neural network with only a single image.

### Description of the Related Art

In the case of tires mounted on general passenger vehicles and trucks, the tread surface is worn and eroded in proportion to the mileage, and for this reason, tires that have worn out over a certain level need to be replaced to ensure safe driving.

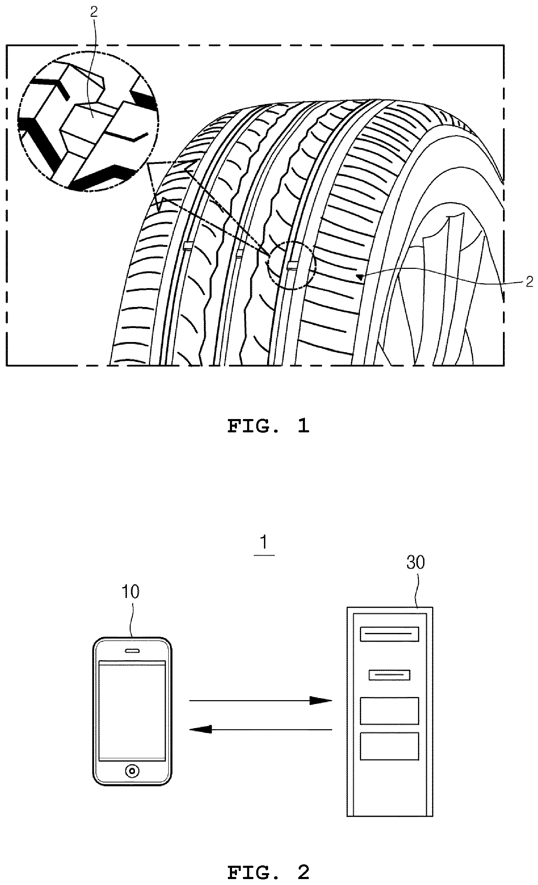

FIG. 1 shows a structure for measuring wear, which is called a tread wear indicator bar. Referring to FIG. 1, tire manufacturers of each vehicle produce tires with a wear measurement structure called a tread wear indicator bar 2 included in the tire tread to objectively determine the wear condition of the tire tread. However, ordinary consumers without professional knowledge are unable to utilize this tread wear indicator bar 2, and having difficulty in determining on their own the wear condition of their car's tires with the naked eye. This leads to a situation in which tire replacement time is delayed or unnecessary visits to repair shops and tire exchange shops to check whether replacement is necessary when no replacement is actually necessary.

In this regard, Korean Patent No. 10-1534259 discloses a method and apparatus for measuring tire wear so as to avoid having to measure the depth of tire tread grooves one by one. According to the patent document, when the tire wear measurement apparatus receives a video image of a tire, a three-dimensional image based on the received video image is produced, and then it is possible to measure the wear level of the tire tread on the basis of the depth of the tread area in the three-dimensional image.

In addition, Korean Patent No. 10-1469563 discloses an apparatus and method for determining tire wear so as to automatically warn that a tire is excessively worn. According to the patent document, it is possible to determine a degree of tire wear on the basis of the braking distance of a vehicle calculated by a separate sensor unit.

As such, a number of documents containing inventions for automatically determining the degree of tire wear have been proposed as conventional background art. However, in the related art, there are limitations since a complex task of shooting and analyzing videos to measure the wear level of the tire tread is required, and a separate sensor is needed. Thus, this specification was derived through commercialization support for companies that achieved excellent results in the "2020 Artificial Intelligence Online Contest" hosted by the Korean Ministry of Science and ICT (task number: A0712-20-1015).

### Documents of Related Art

### Patent Documents

(Patent Document 0001) Korean Patent No. 10-1534259
(Patent Document 0002) Korean Patent No. 10-1469563
Further prior art can be found in US 2020 / 0 125 887 and CN 109 649 091 A.

### SUMMARY OF THE INVENTION

Accordingly, the present invention has been made keeping in mind the above problems occurring in the related art, and the present invention is intended to provide a tire tread wear determination system and method capable of reducing the amount of computation required for algorithm operations by determining the tire wear with only a single image.

Another objective of the present invention is to provide a tire tread wear determination system and method that can easily measure the wear condition of the tire tread using a user's mobile device and general photographing device without a separate sensor.

In order to achieve the above objective, according to an embodiment of the present invention, there is provided a tire tread wear determination system, including: an image receiving unit that receives an image of a tire tread; an image dividing unit that generates an image in which a tire part and a background part are divided from the image received by the image receiving unit; and an output unit that outputs wear level of the tire tread from the image generated by the image dividing unit as one of normal, replace, or danger using a trained deep artificial neural network.

The image dividing unit includes a probability extraction module for extracting a probability that each pixel of the image received by the image receiving unit corresponds to a tire.

The image dividing unit further includes a probability multiplication module for multiplying the probability extracted by the probability extraction module for each pixel corresponding to the image received by the image receiving unit.

Preferably, the tire tread wear determination system may further include a training unit that trains the deep artificial neural network with images each labeled as one of normal, replace, or danger depending on a degree of tire wear based on conditions of the tire tread and shade information between treads.

Preferably, the training unit may train the deep artificial neural network with a single image, and the output unit may output the wear level of the tire tread in a single image to minimize an amount of computation.

Preferably, the tire tread wear determination system may further include an image capturing unit that captures an image of the tire tread and transmits the captured image to the image receiving unit.

Preferably, the tire tread wear determination system may further include a displaying unit that displays an output value of the output unit.

In addition, according to another embodiment of the present invention, there is provided a tire tread wear determination method using a deep artificial neural network, the method includng: image receiving to receive an image of a tire tread; image dividing to divide a tire part and a background part in the image received in the image receiving; training to train a deep artificial neural network with images each labeled as normal, replace, or danger depending on a degree of tire wear based on conditions of the tire tread and shade information between treads; and outputting to output wear level of the tire tread from the image generated in the image dividing as one of normal, replace, or danger using the trained deep artificial neural network.

The image dividing includes probability extracting to extract a probability that each pixel of the image received in the image receiving corresponds to a tire.

The image dividing further includes probability multiplying to multiply the probability extracted in the probability extracting for each pixel corresponding to the image received in the image receiving.

According to the present invention, an image dividing unit and an output unit that measure the wear level of the tire tread using an artificial neural network model can determine the tire wear level with only a single image.

Furthermore, the present invention has an advantage that the wear condition of the tire tread can be measured without a separate sensor using a user's camera.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 shows a structure for measuring wear, which is called a tread wear indicator bar;
FIG. 2 is a block diagram of a tire tread wear determination system according to an embodiment of the present invention;
FIG. 3 is a block diagram of the tire tread wear determination system according to the embodiment of the present invention, in which algorithm operations are performed in a user terminal;
FIG. 4 is a block diagram of the tire tread wear determination system according to the embodiment of the present invention, in which algorithm operations are performed in a server; and
FIG. 5 shows the structure of a deep artificial neural network according to the embodiment of the present invention.

### DETAILED DESCRIPTION OF THE INVENTION

Hereinafter, the present invention will be described in detail with reference to the contents described in the accompanying drawings. However, the present invention is not limited by the exemplary embodiments. The same reference numerals provided in the respective drawings indicate members that perform substantially the same functions.

Objectives and effects of the present invention may be naturally understood or made clearer by the following description, and the objectives and effects of the present invention are not limited only by the following description. In addition, in describing the present invention, if it is determined that a detailed description of a known technology related to the present invention may unnecessarily obscure the gist of the present invention, the detailed description thereof will be omitted.

FIG. 2 is a block diagram of a tire tread wear determination system 1 according to an embodiment of the present invention. Referring to FIG. 2, the tire tread wear determination system 1 may include a user terminal 10 and a server 30. The tire tread wear determination system 1 may include an image capturing unit 100, an image receiving unit 200, an image dividing unit 300, an output unit 400, a displaying unit 500, and a data storage unit 700.

The tire tread wear determination system 1 may determine the wear condition of a tire tread only with a single image 4 taken with the user terminal 10 possessed by ordinary drivers. The tire tread wear determination system 1 may train a deep artificial neural network model by injecting a large number of tire tread images and the need for replacement determined based on the images into the deep artificial neural network model. The tire tread wear determination system 1 may determine the wear level on the basis of the tread surface condition of the single image 4 and the shade information between the treads.

The tire tread wear determination system 1 may also be used for the purpose of supporting a tire exchange shop staff to easily determine the wear level of the tire tread of a customer's vehicle who has visited the shop and to guide the customer.

The tire tread wear determination system 1 may be supplied in the form of an API as wear analysis can be done remotely.

The user terminal 10 is a portable terminal capable of transmitting and receiving data through a network, and includes a smartphone, a laptop, and the like. Here, the user terminal 10 may be a terminal in which software for outputting a tire wear level according to an embodiment of the present invention is installed. The user terminal 10 may be connected to the server 30 through a wireless or wired network.

The server 30 may be configured to enable a large amount of computation for training of the deep artificial neural network. The server 30 may be connected to the user terminal 10 through a wired or wireless network.

The image capturing unit 100 may capture an image of the tire tread and transmit it to the image receiving unit 200. The image capturing unit 100 may be provided in the user terminal 10 or may be a third device. The image capturing unit 100 may transmit the captured image to the image receiving unit 200. The image capturing unit 100 may be connected to the image receiving unit 200 through a wireless or wired network. The image capturing unit 100 may use a broad mobile communication network such as code division multiple access (CDMA), wideband CDMA (WCDMA), long term evolution (LTE), or WiFi when wirelessly connected to the image receiving unit 200.

The displaying unit 500 may display an output value of the output unit 400. The displaying unit 500 may be provided in the user terminal 10 or may be a third device. The displaying unit 500 may display the wear level of the tire tread together with the image captured by a user or a driver.

The data storage unit 700 may store a labeled image used in a training unit 600. The data storage unit 700 may store an image captured by a user or a driver to measure the wear level of the tire tread. The data storage unit 700 may allow the image captured by a user or driver to be used to train the deep artificial neural network. The data storage unit 700 may store a previously measured wear level output value of the tire tread.

The image receiving unit 200 may receive an image of a tire tread. The image receiving unit 200 may receive an image captured by the image capturing unit 100 or a general digital camera. The image receiving unit 200 may be connected to a third device through a wired or wireless network to receive an image captured or stored by the third device. The image receiving unit 200 may receive the image of the tire tread and transmit it to the image dividing unit 300.

The image receiving unit 200 may pre-process the received image. The image receiving unit 200 may perform pre-processing in a manner of normalizing pixel valuesof the received image. When the pixel value of the received image is between 0 and 255, the image receiving unit 200 may pre-process (scale) the pixel value to be between -1 and 1. The image receiving unit 200 may perform pre-processing of adjusting the size and resolution of the received image to be input to the deep artificial neural network.

The image dividing unit 300 may generate an image in which a tire part and a background part are divided from the image received by the image receiving unit 200. The image dividing unit 300 may reduce image information on the background area so that the deep artificial neural network in the output unit 400 concentrates the computation on the tire tread. The image dividing unit 300 may generate an image in which the tire part is divided to be less affected by the background part. Accordingly, the image dividing unit 300 may allow the output unit 400 to output the wear level of the tire tread with high accuracy.

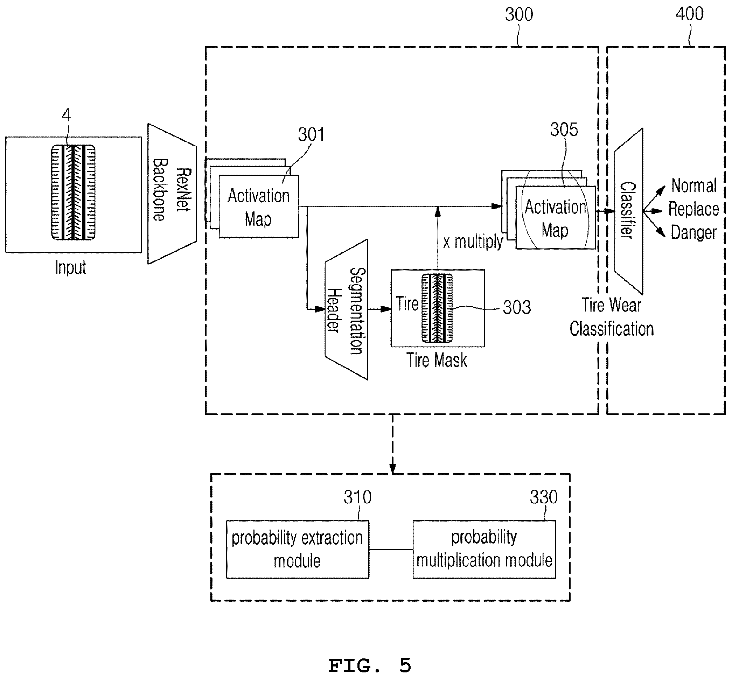

FIG. 5 shows the structure of a deep artificial neural network according to the embodiment of the present invention. Referring to FIG. 5, the image dividing unit 300 includes a
probability extraction module 310 and a probability multiplication module 330.

The probability extraction module 310 may extract a probability that each pixel of the image received by the image receiving unit 200 corresponds to a tire. The probability extraction module 310 may extract a probability (tread probability mask) of whether each pixel corresponds to a tire or a background at the pixel level by using the segmentation model. In the probability extraction module 310, the criterion for calculating the probability is not set by a user. That is, in the probability extraction module 310, the criterion for obtaining the probability is set by learning based on a deep artificial neural network.

The probability extraction module 310 may extract a probability that a specific pixel corresponds to a tire as a value between 0 and 1. When the probability extraction module 310 extracts a high probability, the corresponding pixel may be regarded as having a high probability of being a part of the tire.

When the probability extracted by the probability extraction module 310 is equal to or greater than a certain reference value, the pixel may be regarded as a part of the tire. The probability extraction module 310 may set the reference value by the user. In addition, the probability extraction module 310 may set the reference value through learning of the deep artificial neural network. In an embodiment, when the probability extracted by the probability extraction module 310 is 0.5 or more, the pixel may be regarded as a part of the tire.

The probability multiplication module 330 may multiply the probability extracted by the probability extraction module for each pixel corresponding to the image received by the image receiving unit 200. The probability multiplication module 330 may dilute information on a background part unrelated to a tire by multiplying a pixel value of an existing image by a probability corresponding to a tire for each pixel. The probability multiplication module 330 may generate an image in which information on a background area is diluted and information on a tire tread is emphasized by multiplying the extracted probability for each pixel corresponding to the input image.

The probability multiplication module 330 may generate a mutiplied activation map 305 obtained by multiplying an activation map 301, which is a model generated in the CNN-based deep artificial neural network, by the tread probability mask 303. The probability multiplication module 330 may input the mutiplied activation map 305 to the output unit 400.

The mutiplied activation map 305 is an image in which the tire part and the background part are divided. The mutiplied activation map 305 may allow the output unit 400 to be less affected by the background area when outputting the wear level of the tire tread.

The output unit 400 may output the wear level of the tire tread from the image generated by the image dividing unit 300 as one of normal, replace, or danger using a trained deep artificial neural network. The output unit 400 may measure the wear condition of the tire tread by inputting the image generated by the image dividing unit 300 into the trained deep artificial neural network and analyzing pixels in the image.

The output unit 400 may use an artificial neural network-based neural network algorithm (DNN, CNN) as a deep artificial neural network model. When using a convolutional neural network (CNN) as a deep artificial neural network model, an artificial neural network may be used with minimal pre-processing. The CNN consists of one or several convolutional layers and general artificial neural network layers on top thereof, and additionally utilizes weights and integration layers. The CNN has the advantage of being easier to train than existing artificial neural network techniques and using fewer parameters.

With the value output by the output unit 400, the driver may determine the need for tire replacement. When the value output by the output unit 400 is "normal", it means that the need for replacement is low. In the case of "replace", it means that there is a need for replacement, and in the case of "danger", there is a need for immediate replacement.

The training unit 600 may train the deep artificial neural network with images each labeled as one of normal, replace, or danger depending on a degree of tire wear based on conditions of the tire tread and shade information between treads. The each image used in the training unit 600 may be labeled as one of normal, replace, or danger in a voting (majority voting) method by forming an annotation group of three or more tire experts who have evaluated tire wear for more than 10 years.

The training unit 600 may use an image in which the tire part and the background part are divided as an input value of the deep artificial neural network to be learned. The training unit 600 may use an image passed through the image dividing unit 300 as an input value. The training unit 600 may increase the accuracy and precision of learning by using an image in which the tire part is emphasized.

The training unit 600 may train the deep artificial neural network with a single image, and the output unit 400 may output the wear level of the tire tread in a single image to minimize an amount of computation of the tire tread wear determination system 1. A single image 4 has an advantage in that the amount of computation required for algorithm operations is smaller than that of a moving image or a plurality of images.

According to the embodiment, a user or driver may easily measure the wear level of the tire tread with only the single image 4. The user or driver may check the need for replacement according to the wear condition of the tire tread classified in three categories: normal, replace, or danger with only the single image 4 taken with a smartphone, eliminating the need to visit an auto service center to check whether a tire needs to be replaced.

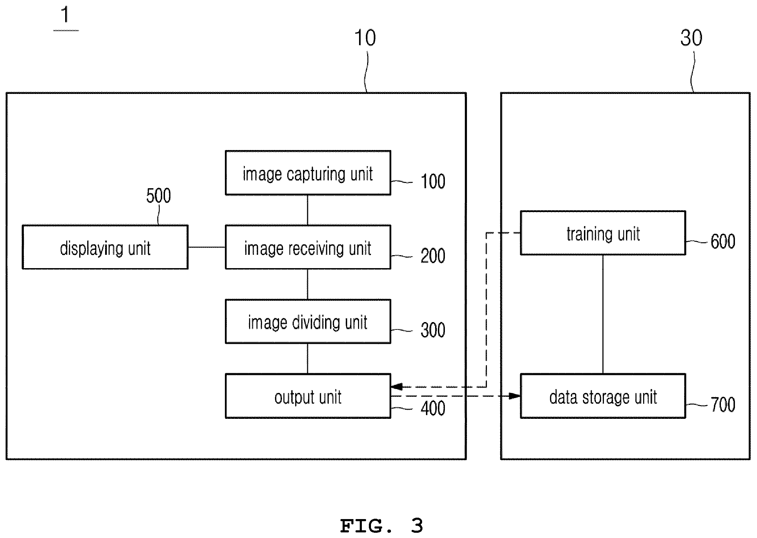

FIG. 3 is a block diagram of the tire tread wear determination system according to the embodiment of the present invention, in which algorithm operations are performed in a user terminal. Referring to FIG. 3, the user terminal 10 may include the image capturing unit 100, the image receiving unit 200, the image dividing unit 300, the output unit 400, and the displaying unit 500. The server 300 may include the training unit 600 and the data storage unit 700. According to the embodiment, the tire tread wear determination system 1 trains the deep artificial neural network in the training unit 600 included in the server 30. The tire tread wear determination system 1 transmits the trained deep artificial neural network from the training unit 600 included in the server 30 to the output unit 400. The tire tread wear determination system 1 outputs the wear level of the tire tread from the image dividing unit 300 and the output unit 400 included in the user terminal 10.

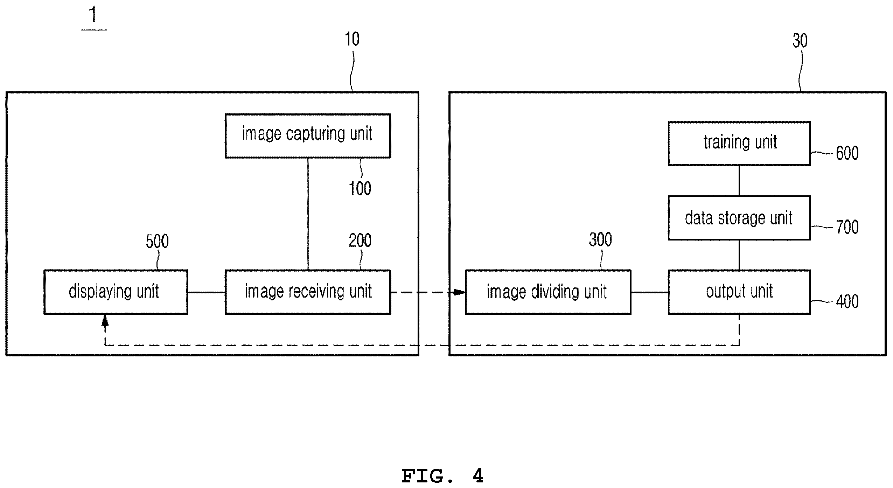

FIG. 4 is a block diagram of the tire tread wear determination system according to the embodiment of the present invention, in which algorithm operations are performed in a server. Referring to FIG. 4, the user terminal 10 may include the image capturing unit 100, the image receiving unit 200, and the displaying unit 500. The server 300 may include the image dividing unit 300, the output unit 400, the training unit 600, and the data storage unit 700. According to the embodiment, the tire tread wear determination system 1 trains the deep artificial neural network in the training unit 600 included in the server 30. The tire tread wear determination system 1 transmits an image from the image receiving unit 200 included in the user terminal 10 to the image dividing unit 300 included in the server 30. The tire tread wear determination system 1 outputs the wear level of the tire tread from the image dividing unit 300 and the output unit 400 included in the server 30.

In another embodiment of the present invention, a tire tread wear determination method may include image receiving, image dividing, training, and outputting.

In the step of image receiving, an image of a tire tread may be received. The step of image receiving refers to an operation performed by the above-described image receiving unit 200.

In the step of image dividing, the tire part and the background part may be divided on the image received in the image receiving step. The step of image dividing refers to an operation performed by the above-described image dividing unit 300.

The step of image dividing may include the steps of probability extracting and probability multiplying.

In the step of probability extracting, the probability that each pixel of the image received in the image receiving step corresponds to a tire may be extracted. The step of probability extracting refers to an operation performed by the above-described probability extraction module 310.

In the step of probability multiplying, the probability extracted in the probability extracting step may be multiplied for each pixel corresponding to the image received in the image receiving step. The step of probability multiplying refers to an operation performed by the above-described probability multiplication module 330.

In the step of training, the deep artificial neural network may be trained with images each labeled as one of normal, replace, or danger depending on a degree of tire wear based on conditions of the tire tread and shade information between treads. The step of training refers to an operation performed by the above-described training unit 600.

In the step of outputting, the wear level of tire tread from the image generated in the image dividing step may be outputted as one of normal, replace, or danger using the trained deep artificial neural network. The step of outputting refers to an operation performed by the above-described output unit 400.

The tire tread wear determination system 1 may be stored and executed in the user terminal 10. The tire tread wear determination system 1 may be stored in the user terminal 10 in the form of an application.

A user or driver may execute the vehicle management application to execute the tire tread wear determination system 1 included in the application. The driver may take a picture of the tire by touching a shooting part in the application. In the application, an example photo may be presented to increase the accuracy of the determination of the wear condition.

The image receiving unit 200 receives the single image 4 taken by the user or driver, and the output unit 400 outputs the wear condition. The application may display the tire replacement necessity on the user terminal 10 as one of normal, replace, or danger according to the final measured value.

With the vehicle management application according to the embodiment of the present invention, the driver is able to check the wear level of the tire in real time by measuring the wear level from the single image 4 by using a camera of the mobile device that ordinary drivers have, without a separate sensor attached to the vehicle and without having to measure the tread thickness directly.

In the above, the present invention has been described in detail with respect to the preferred embodiments, however, those skilled in the art to which the present invention pertains will understand that various modifications may be made to the above-described embodiments without departing from the scope of the present invention.

## Claims

1. A tire tread wear determination system (1) using a deep artificial neural network, the system (1) comprising:
an image receiving unit (200) that receives an image of a tire tread;
an image dividing unit (300) that generates an image in which a tire part and a background part are divided from the image received by the image receiving unit (200); and
an output unit (400) that outputs wear level of the tire tread from the image generated by the image dividing unit (300) as one of normal, replace, or danger using a trained deep artificial neural network, **characterized in that** the image dividing unit (300) comprises: a probability extraction module (310) for extracting a probability that each pixel of the image received by the image receiving unit (200) corresponds to a tire, and a probability multiplication module (330) for multiplying the probability extracted by the probability extraction module (310) for each pixel corresponding to the image received by the image receiving unit (200).

2. The tire tread wear determination system (1) of claim 1, the system (1) further comprises:
a training unit (600) that trains the deep artificial neural network with images each labeled as one of normal, replace, or danger depending on a degree of tire wear based on conditions of the tire tread and shade information between treads.

3. The tire tread wear determination system of claim 2, wherein the training unit (600) trains the deep artificial neural network with a single image, and the output unit (400) outputs the wear level of the tire tread in a single image to minimize an amount of computation.

4. The tire tread wear determination system (1) of any one of claims 1 to 3, the system further comprises:
an image capturing unit (100) that captures an image of the tire tread and transmits the captured image to the image receiving unit (200).

5. The tire tread wear determination system (1) of any one of claims 1 to 4, the system (1) further comprises:
a displaying unit (500) that displays an output value of the output unit (400).

6. A tire tread wear determination method using a deep artificial neural network, the method comprising:
image receiving to receive an image of a tire tread;
image dividing to divide a tire part and a background part in the image received in the image receiving;
training to train a deep artificial neural network with images each labeled as normal, replace, or danger depending on a degree of tire wear based on conditions of the tire tread and shade information between treads; and
outputting to output wear level of the tire tread from the image generated in the image dividing as one of normal, replace, or danger using the trained deep artificial neural network, **characterized in that** the image dividing comprises: probability extracting to extract a probability that each pixel of the image received in the image receiving corresponds to a tire, and probability multiplying to multiply the probability extracted in the probability extracting for each pixel corresponding to the image received in the image receiving.

## Patentansprüche

1. Reifenlaufflächenabnutzungsbestimmungssystem (1), das ein tiefes künstliches neuronales Netz verwendet, wobei das System (1) Folgendes umfasst:
eine Bildempfangseinheit (200), die ein Bild einer Reifenlauffläche empfängt;
eine Bildaufteilungseinheit (300), die ein Bild erzeugt, in dem ein Reifenteil und ein Hintergrundteil aus dem von der Bildempfangseinheit (200) empfangenen Bild aufgeteilt werden; und
eine Ausgabeeinheit (400), die unter Verwendung eines trainierten tiefen künstlichen neuronalen Netzes einen Abnutzungsgrad der Reifenlauffläche aus dem durch die Bildaufteilungseinheit (300) erzeugten Bild als entweder normal oder ersetzen oder Gefahr ausgibt, **dadurch gekennzeichnet, dass** die Bildaufteilungseinheit (300) Folgendes umfasst: ein Wahrscheinlichkeitsextraktionsmodul (310) zum Extrahieren einer Wahrscheinlichkeit, dass jedes Pixel des von der Bildempfangseinheit (200) empfangenen Bilds einem Reifen entspricht, und ein Wahrscheinlichkeitsmultiplikationsmodul (330) zum Multiplizieren der Wahrscheinlichkeit, die von dem Wahrscheinlichkeitsextraktionsmodul (310) extrahiert wurde, für jedes Pixel, das dem von der Bildempfangseinheit (200) empfangenen Bild entspricht.

2. Reifenlaufflächenabnutzungsbestimmungssystem (1) nach Anspruch 1, wobei das System (1) des Weiteren Folgendes umfasst:
eine Trainiereinheit (600), die das tiefe künstliche neuronale Netz mit Bildern trainiert, die abhängig von einem Ausmaß einer Reifenabnutzung basierend auf Zuständen der Reifenlauffläche und Schatteninformationen zwischen Laufflächen jeweils als entweder normal oder ersetzen oder Gefahr gekennzeichnet sind.

3. Reifenlaufflächenabnutzungsbestimmungssystem (1) nach Anspruch 2, wobei die Trainiereinheit (600) das tiefe künstliche neuronale Netz mit einem einzelnen Bild trainiert und wobei die Ausgabeeinheit (400) den Abnutzungsgrad der Reifenlauffläche in einem einzelnen Bild ausgibt, um einen Berechnungsumfang zu minimieren.

4. Reifenlaufflächenabnutzungsbestimmungssystem (1) nach einem der Ansprüche 1 bis 3, wobei das System des Weiteren Folgendes umfasst:
eine Bildaufnahmeeinheit (100), die ein Bild der Reifenlauffläche aufnimmt und das aufgenommene Bild an die Bildempfangseinheit (200) sendet.

5. Reifenlaufflächenabnutzungsbestimmungssystem (1) nach einem der Ansprüche 1 bis 4, wobei das System (1) des Weiteren Folgendes umfasst:
eine Anzeigeeinheit (500), die einen Ausgabewert der Ausgabeeinheit (400) anzeigt.

6. Reifenlaufflächenabnutzungsbestimmungsverfahren, das ein tiefes künstliches neuronales Netz verwendet, wobei das Verfahren folgende Schritte umfasst:
Bildempfangen, um ein Bild einer Reifenlauffläche zu empfangen;
Bildaufteilen, um einen Reifenteil und einen Hintergrundteil in dem beim Bildempfangen empfangenen Bild aufzuteilen;
Trainieren, um ein tiefes künstliches neuronales Netz mit Bildern zu trainieren, die abhängig von einem Ausmaß einer Reifenabnutzung basierend auf Zuständen der Reifenlauffläche und Schatteninformationen zwischen Laufflächen jeweils als entweder normal oder ersetzen oder Gefahr gekennzeichnet sind; und
Ausgeben, um unter Verwendung des trainierten tiefen künstlichen neuronalen Netzes einen Abnutzungsgrad der Reifenlauffläche aus dem beim Bildaufteilen erzeugten Bild als entweder normal oder ersetzen oder Gefahr auszugeben, **dadurch gekennzeichnet, dass** das Bildaufteilen folgende Schritte umfasst:
Wahrscheinlichkeitsextrahieren, um eine Wahrscheinlichkeit zu extrahieren, dass jedes Pixel des beim Bildempfangen empfangenen Bilds einem Reifen entspricht, und Wahrscheinlichkeitsmultiplizieren, um die Wahrscheinlichkeit, die beim Wahrscheinlichkeitsextrahieren extrahiert wurde, für jedes Pixel, das dem beim Bildempfangen empfangenen Bild entspricht, zu multiplizieren.

## Revendications

1. Système de détermination (1) de l'usure d'une bande de roulement de pneu utilisant un réseau de neurones artificiels profond, le système (1) comprenant :
une unité (200) de réception d'image qui reçoit une image d'une bande de roulement de pneu ;
une unité (300) de division d'image qui génère une image dans laquelle une partie de pneu et une partie d'arrière-plan sont divisées de l'image reçue par l'unité (200) de réception d'image ; et
une unité de sortie (400) qui émet un niveau d'usure de la bande de roulement de pneu de l'image générée par l'unité (300) de division d'image comme un parmi normal, remplacer ou danger utilisant un réseau de neurones artificiels profond entraîné, **caractérisé en ce que** l'unité (300) de division d'image comprend : un module (310) d'extraction de probabilité pour extraire une probabilité que chaque pixel de l'image reçue par l'unité (200) de réception d'image correspond à un pneu, et un module (330) de multiplication de probabilité pour multiplier la probabilité extraite par le module (310) d'extraction de probabilité pour chaque pixel qui correspond à l'image reçue par l'unité (200) de réception d'image.

2. Système de détermination (1) de l'usure d'une bande de roulement de pneu selon la revendication 1, le système (1) comprenant en outre :
une unité d'entraînement (600) qui entraîne le réseau de neurones artificiels profond avec des images dont chacune est marquée comme un parmi normal, remplacer ou danger en fonction d'un degré d'usure d'un pneu sur la base de conditions de la bande de roulement de pneu et d'informations d'ombre entre des bandes de roulement.

3. Système de détermination de l'usure d'une bande de roulement de pneu selon la revendications 2, dans lequel l'unité d'entraînement (600) entraîne le réseau de neurones artificiels profond avec une seule image, et dans lequel l'unité de sortie (400) émet le niveau d'usure de la bande de roulement de pneu dans une seule image pour minimiser une quantité de calcul.

4. Système de détermination (1) de l'usure d'une bande de roulement de pneu selon l'une quelconque des revendications 1 à 3, le système comprennent en outre :
une unité (100) de capture d'image qui capture une image de la bande de roulement de pneu et transmet l'image capturée à l'unité (200) de réception d'image.

5. Système de détermination (1) de l'usure d'une bande de roulement de pneu selon l'une quelconque des revendications 1 à 4, le système comprennent en outre :
une unité d'affichage (500) qui affiche une valeur de sortie de l'unité de sortie (400).

6. Procédé de détermination de l'usure d'une bande de roulement de pneu utilisant un réseau de neurones artificiels profond, le procédé comprenant les étapes suivantes :
recevoir une image pour recevoir une image d'une bande de roulement de pneu ;
diviser une image pour diviser une partie de pneu et une partie d'arrière-plan dans l'image reçue dans l'étape consistant à recevoir une image ;
entraîner pour entraîner un réseau de neurones artificiels profond avec des images dont chacune est marquée comme un parmi normal, remplacer ou danger en fonction d'un degré d'usure d'un pneu sur la base de conditions de la bande de roulement de pneu et d'informations d'ombre entre des bandes de roulement ; et
émettre pour émettre un niveau d'usure de la bande de roulement de pneu de l'image générée dans l'étape consistant à diviser une image comme un parmi normal, remplacer ou danger utilisant le réseau de neurones artificiels profond entraîné, **caractérisé en ce que** l'étape consistant à diviser une image comprend les étapes suivantes :
extraire une probabilité pour extraire une probabilité que chaque pixel de l'image reçue dans l'étape consistant à recevoir une image correspond à un pneu, et multiplier une probabilité pour multiplier la probabilité extraite dans l'étape consistant à extraire une probabilité pour chaque pixel qui correspond à l'image reçue dans l'étape consistant à recevoir une image.
